# EUROPEAN PATENT SPECIFICATION

(11) **EP 4 030 080 B1**
(45) Date of publication and mention of the grant of the patent: **10.04.2024**
(21) Application number: 20863658.9
(22) Date of filing: 17.08.2020
(51) Int. Cl.: F16H 25/24, F16D 63/00, A47B 91/02

(54) **SELF-LOCKING DEVICE FOR LINEAR ACTUATOR AND LINEAR ACTUATOR**
SELBSTSPERRENDE VORRICHTUNG FÜR LINEARANTRIEB UND LINEARANTRIEB
DISPOSITIF DE VERROUILLAGE AUTOMATIQUE POUR ACTIONNEUR LINÉAIRE, ET ACTIONNEUR LINÉAIRE

(30) Priority: 12.09.2019 CN 201910864861
(43) Date of publication of application: 20.07.2022
(73) Proprietor: Zhejiang Jiecang Linear Motion Technology Co., Ltd, Shaoxing, Zhejiang 312500 (CN)
(72) Inventor: HU, Renchang, Shaoxing, Zhejiang 312500 (CN); LU, Xiaojian, Shaoxing, Zhejiang 312500 (CN); WU, Donghai, Shaoxing, Zhejiang 312500 (CN); CHENG, Yunshan, Shaoxing, Zhejiang 312500 (CN)
(74) Representative: Kreuels, Justus
(86) International application number: PCT/CN2020/109658
(87) International publication number: WO 2021/047355

(56) References cited:
- WO-A1-2018/198526
- WO-A1-2018/198526
- CN-A- 1 898 484
- CN-A- 107 314 090
- CN-A- 110 778 673
- JP-A- H0 942 408
- JP-A- 2003 301 919
- JP-A- 2007 154 954

## Description

### TECHNICAL FIELD

The present invention relates to the field of linear actuation equipment, and more particularly relates to a linear actuator comprising a self-locking apparatus.

### BACKGROUND

Linear actuators are currently applied in a wide array of fields, including electric height adjustable tables/desks, electric beds, and electric sofa, etc. Such linear actuators generally have a structure comprising a driving motor, a rotary screw, and a transmission nut, wherein the driving motor activates the rotary screw to rotate, and the rotating rotary screw drives the transmission nut to move axially, wherein the transmission nut may be connected to an object to actuate, thereby enabling actuation.

For example, a conventional electric height adjustable table comprises a lifting column, wherein the driving motor, the rotary screw, and the transmission nut are provided in the lifting column. Lifting and lowering of tubes are actuated by the transmission nut. Such electric height adjustable tables need a self-locking function, i.e., when the motor does not operate, the lifting column is self-lockable so as to prevent autonomous descending of the height adjustable table. Self-locking functions are disclosed and realized in documents WO 2018/198526 A1 and CN 1 898 484 A, for example The self-locking function of conventional lifting columns is mostly implemented using a brake torsion spring, wherein the rotary screw rotates reversely to cause the brake torsion spring gripped to produce a brake force. However, the self-locking force produced by conventional self-locking structures is not enough.

### SUMMARY

To overcome the above and other drawbacks of the prior art, the present invention provides a linear actuator comprising a self-locking apparatus which may enhance self-locking property of the linear actuator.

The objective is achieved by a linear actuator comprising a self-locking apparatus as described in claim 1. Advantageous embodiments are described in the dependent claims.

The present invention offers the following beneficial effects:

In the present invention, the self-locking apparatus employs a structure of fitting between the one-way bearing and the friction collar; since the one-way bearing can only rotate in one way, the inner race and the outer race in the one-way bearing are mutually separated when the rotary screw is rotating forward; in this case, the one-way bearing is like a typical roller bearing, i.e., rotation of the inner race does not bring the outer race to rotate. Under this status, the friction collar on the outer race does not move relative to the friction member, such that no friction is produced and the rotary screw may operate without resistance.

However, when the rotary screw rotates reversely, self-locking occurs between the inner race and the outer race of the one-way bearing, causing the inner race and the outer race to rotate synchronously; rotation of the outer race brings simultaneous rotation of the friction collar, while rotation of the friction collar incurs a relative movement with respect to the friction member. The relative movement between the friction collar and the friction member produces friction. Due to the principle of opposite action, the friction causes resistance against the rotary screw, equivalent to producing a self-locking force for the rotary screw.

Based on this structure, when the driving motor activates the rotary screw to rotate, a torsion of the driving motor suffices to overcome the self-locking force to cause the rotary screw to rotate reversely; therefore, with the driving motor as active drive, the self-locking apparatus does not affect normal extension or retraction of the linear actuator; however, when the driving motor does not operate and the rotary screw autonomously rotates reversely, the rotary screw has a motion tendency of reverse rotation. This motion tendency further causes a relative motion tendency between the friction collar and the friction member; however, the fiction between the friction collar and the friction member holds back the motion tendency, thereby implementing self-locking.

Moreover, compared with conventional flexible self-locking manner using a torsion spring, the self-locking apparatus according to the present invention relies on rigid self-locking using the friction collar and the friction member, rendering a more stable, greater self-locking force, which also ensures service life of the self-locking apparatus.

In an embodiment, a floating gap is provided between the friction collar and the friction member along an axial direction of the rotary screw.

In an embodiment, friction is produced between a circumferential side portion of the friction collar and the friction member; and friction is produced between an axial end portion of the friction collar and the friction member.

According to the invention the linear actuator comprises a first sleeve, a second sleeve, a rotary screw, a transmission nut, and a driving motor, the driving motor activating the rotary screw to rotate, the rotating rotary screw driving the transmission nut to move axially, and movement of the transmission nut causing the first sleeve and the second sleeve to extend and retract relative to each other, wherein the self-locking apparatus according to any one of the above solutions is mounted on the rotary screw.

According to the invention the friction collar is sleeved over an outer race, and a plane bearing is further mounted on the transmission nut, the plane bearing and the friction member being located at two different axial sides of the friction collar.

According to the invention the linear actuator further comprises a support base, an axial direction of the support base being distant from the plane bearing; the friction member comprises a friction outer race mounted in the support base, the friction outer race being sleeved outside the friction collar, such that friction is produced by contacting between the friction outer race and a circumferential side portion of the friction collar.

According to the invention a circumferential sidewall of the friction collar has an outer conical surface, the conical surface being gradually shrunk towards a side distant from the plane bearing; an inner sidewall of the friction outer race has an inner conical surface adapted to the outer conical surface; or, a circumferential side surface of the friction collar is a stepped surface, the inner sidewall of the friction outer race being adapted to the stepped surface.

In an embodiment, the linear actuator further comprises a support base, an axial direction of the support base being distant from the plane bearing; and the friction member comprises a friction pad mounted in the support base, such that friction is produced when the friction pad abuts against an axial end portion of the friction collar.

In an embodiment, a stepped portion is provided on the rotary screw, wherein the plane bearing is axially positioned on the stepped portion.

In an embodiment, the support base is provided with a base cavity, wherein the friction member is mounted in the base cavity and the friction collar is at least partially embedded in the base cavity; and a radial support member is provided between the friction collar and a wall of the base cavity, the radial support member referring to a bearing or a support ring.

These characteristics and advantages of the present invention will be invention in detail in the preferred embodiments below with reference to the accompanying drawings.

### BRIEF DESCRIPTION OF THE DRAWINGS

Hereinafter, the present invention will be described in further detail with reference to the accompanying drawings:
Fig. 1 is an overall structural schematic diagram of a linear actuator of the present invention;
Fig. 2 is an exploded schematic diagram of the linear actuator in a first embodiment which is not part of the present invention;
Fig. 3 is an enlarged view of part A in Fig. 2;
Fig. 4 is a sectional schematic diagram of a linear actuator in a first embodiment
Fig. 5 is an enlarged view of part B in Fig. 4;
Fig. 6 is an exploded schematic diagram of a self-locking apparatus in a second embodiment according to the present invention;
Fig. 7 is a sectional schematic diagram of a self-locking apparatus in the second embodiment according to the present invention.

### DETAILED DESCRIPTION

Hereinafter, the technical solutions of the present invention will be explained and illustrated through embodiments with reference to the accompanying drawings. However, the embodiments are only some embodiments of the present invention, not all of them. Other embodiments obtained by those skilled in the art without exercise of inventive work based on the examples in the embodiments all fall within the protection scope of the present invention.

In the description below, the orientation or position relationships indicated by the terms "inner," "outer," "upper," "lower," "left," and "right," etc. are intended only for facilitating description of the present invention and simplifying the illustrations, not for indicating or implying that the devices or elements have to possess those specific orientations or have to be configured and operated with those specific orientations; therefore, they should not be construed as limitations to the present invention.

### First Embodiment

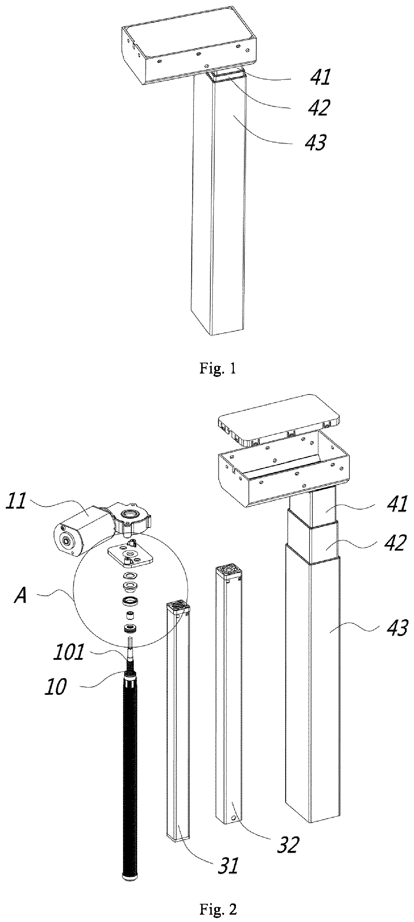

Figs. 1 to 5 illustrate application of a self-locking apparatus to a linear actuator. The embodiment in Figs. 2 to 5 show an example for helping to understand the invention. Linear actuators come in various types, e.g., lifting column, electric pushrod, etc. In this embodiment, the self-locking apparatus is specifically applied to a lifting column. The lifting column, which is usually applied to an electric height adjustable table, is also referred to as a lifting leg. The lifting column may be lifted and lowered under actuation by a driving motor 11, thereby realizing lifting and lowering of a table top. For such electric height adjustable tables, their lifting and lowering are normally driven by the driver motor 11; however, once the driver motor 11 does not operator or is accidentally out of power, the lifting column per se needs a self-locking capability so as to prevent the table top from autonomously lowering under a relatively large load. Therefore, the lifting columns of conventional electric height adjustable tables are generally equipped with a self-locking apparatus. However, conventional self-locking apparatuses for lifting columns usually perform braking via a torsion spring.

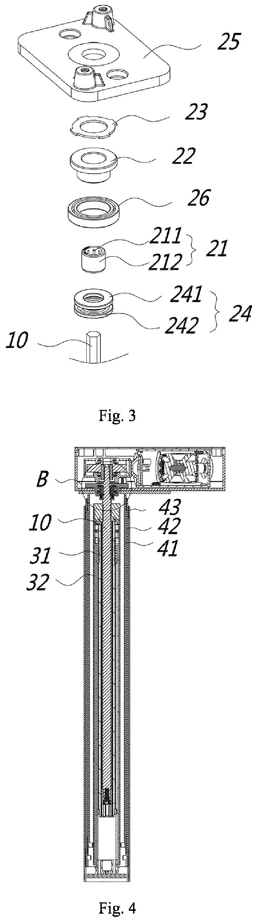

In this embodiment, as illustrated in Figs. 2 and 3, a self-locking apparatus comprises a one-way bearing 21 and a friction collar 22, wherein the one-way bearing 21 comprises an inner race 211 and an outer race 212. Since the one-way bearing 21 is a common product in the mechanical field, it will not be described in detail herein. The inner race 211 of the one-way bearing 21 is sleeved to a rotary screw 10 of the linear actuator, the friction collar 22 is connected to the outer race 212. The self-locking apparatus further comprises a friction member 23 fitted with the friction collar 22, such that when the rotary screw 10 rotates forwardly, the outer race 212 does not rotate; and when the rotary screw 10 rotates reversely, the outer race 212, the inner race 211, and the friction collar 22 rotate synchronously, such that friction is produced by contacting between the friction collar 22 and the friction member 23.

In this embodiment, the self-locking apparatus employs a structure of fitting between the one-way bearing 21 and the friction collar 22; since the one-way bearing 21 can only rotate in one way, the inner race 211 and the outer race 212 in the one-way bearing 21 are mutually separated when the rotary screw 10 is rotating forward; in this case, the one-way bearing 21 is like a typical roller bearing, i.e., rotation of the inner race 211 does not bring the outer race 212 to rotate. Under this status, the friction collar 22 on the outer race 212 does not move relative to the friction member 23, such that no friction is produced and the rotary screw 10 may operate without resistance.

However, when the rotary screw 10 rotates reversely, self-locking occurs between the inner race 211 and the outer race 212 on the one-way bearing, causing the inner race 211 and the outer race 212 to rotate synchronously; rotation of the outer race 212 brings simultaneous rotation of the friction collar 22, while rotation of the friction collar 22 incurs a relative movement with respect to the friction member 23. The relative movement between the friction collar 22 and the friction member 23 produces friction. Due to the principle of opposite action, the friction causes resistance against the rotary screw 10, equivalent to generating a self-locking force for the rotary screw 10.

Based on this structure, when the driving motor 11 activates the rotary screw 10 to rotate, the torsion of the driving motor 11 suffices to overcome the self-locking force to cause the rotary screw 10 to rotate reversely; therefore, with the driving motor 11 as active drive, the self-locking apparatus does not affect normal extension or retraction of the linear actuator; however, when the driving motor 11 does not operate and the rotary screw 10 autonomously rotates reversely, the rotary screw 10 has a motion tendency of reverse rotation. This motion tendency further causes a relative motion tendency between the friction collar 22 and the friction member 23; however, the fiction between the friction collar and the friction member holds back the motion tendency, thereby implementing self-locking. In a scenario of applying the self-locking apparatus to a lifting column, when the driving motor 11 drives normally, the lifting column may be lifted and lowered normally, while when the driving motor does not work, thanks to the self-locking force of the self-locking apparatus, the load on the electric height adjustable table does not suffice to drive the lifting column to be lowered.

Moreover, compared with conventional flexible self-locking manner using a torsion spring, the self-locking apparatus according to the present invention relies on rigid self-locking using the friction collar 22 and friction member 23, rendering a more stable, greater self-locking force, which also ensures service life of the self-locking apparatus.

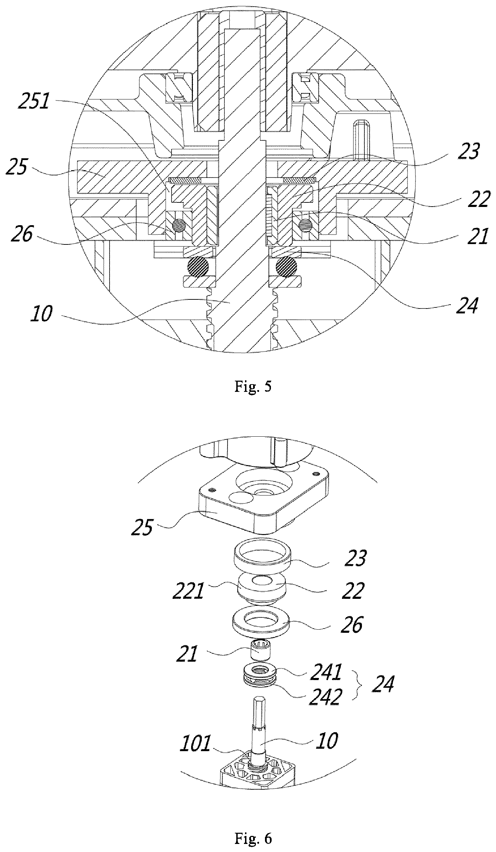

To reduce resistance applied by the self-locking apparatus to the rotary screw 10 when the driving motor 11 serves as active drive, a floating gap is provided between the friction collar 22 and the friction member 23 along an axial direction of the rotary screw 10. The axial direction herein refers to the axial direction of the rotary screw 10. Due to presence of the floating gap in the axial direction between the friction collar 22 and the friction member 23, the friction between the friction collar 22 and the friction member 23 is varied by an axial force. When the friction collar 22 and the friction member 23 are subjected to a relatively large axial stress, the floating gap between the friction collar 22 and the friction member 23 decreases, rendering a tighter contact and thus a larger friction; while when the friction collar 22 and the friction member 23 are subjected to a relatively small axial stress, the friction becomes smaller; in this way, the magnitude of the self-locking force may be autonomously controlled based on actual load on the height adjustable table. Specifically, Fig. 5 may be referenced. Since an axial motion interference usually arises when assembling the rotary screw 10, the rotary screw 10 has a slight axial play during the lifting and lowering of the height adjustable table; the axial play of the rotary screw 10 brings the friction collar 22 to approach to the friction member 23 axially or move away from the friction member 23 axially, thereby adjusting the floating gap between the friction collar 22 and the friction member 23.

The friction between the friction collar 22 and the friction member 23 may be implemented in various manners. In this embodiment, the friction is produced between the axial end portion of the friction collar 22 and the friction member 23. As illustrated in Figs. 3 - 5, in this embodiment, the friction member 23 is a friction pad, wherein the friction collar 22 is sleeved over the rotary screw 10, and the friction pad is disposed above the friction collar 22, such that the top surface of the friction collar 22 contacts with the bottom surface of the friction pad to thereby produce friction.

In addition, a plane bearing 24 is preferably further provided in this embodiment. The plane bearing 24 is also sleeved over the rotary screw 10 and but sleeved beneath the axial direction of the friction collar 22. That is, the plane bearing 24 and the friction member 23 are disposed at two different axial sides of the friction collar 22. In this way, a smaller friction is produced when the rotary screw 10 rotates relative to the friction collar 22. That is, when the rotary screw 10 is driven by the driving motor 11 to rotate forwardly, the friction collar 22 and the upper race 241 of the plane bearing 24 maintains stationary, while the rotary screw 10 and the lower race 242 of the plane bearing 24 rotate together.

To facilitate assembly, a support base 25 is provided in this embodiment. The support base 25 is axially distant from the plane bearing 24, and the friction pad is installed in the support base 25. Additionally, a stepped portion 101 is provided on the rotary screw 10, and the plane bearing 24 is axially positioned on the stepped portion 101. In this way, the plane bearing 24, the friction collar 22, the one-way bearing 21, and the friction pad in this embodiment are all installed between the stepped portion 101 and the support base 25 to thereby perform axial positioning; when the rotary screw 10 is subjected to an axial force, the stepped portion 101 transmits the axial force to the plane bearing 24, which is then transmitted by the plane bearing 24 to the friction collar 22; finally, the friction collar 22 abuts against the friction pad to produce friction.

To offer a better stability to the self-locking apparatus, a base cavity 251 is provided for the support base 25, wherein the friction member 23 is installed in the base cavity 251 and the friction collar 22 is at least partially embedded in the base cavity 251. A radial support member 26 is provided between the friction collar 22 and a wall of the base cavity 251; wherein the radial support member 26 refers to a bearing or a support ring. In this embodiment, the radial support member 26 is preferably a bearing; in this way, the one-way bearing 21, the friction collar 22, the friction pad, and the support base 25 are substantially integrated, thereby achieving a better positioning effect either radially or axially, which offers a better stability.

### Second Embodiment

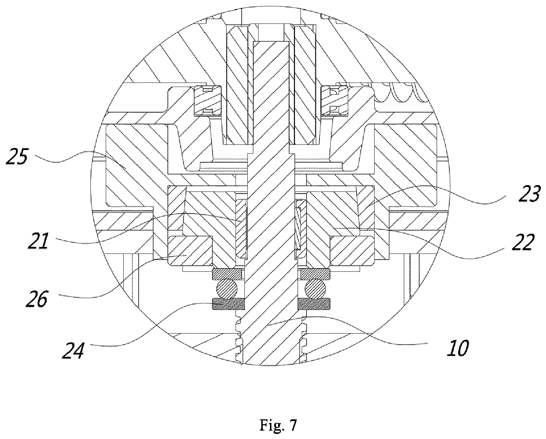

As illustrated in Fig. 6 and Fig. 7, the second embodiment differs from the first embodiment in that in the first embodiment, the friction between the friction member 23 and the friction collar 22 is produced by contacting between end portions; while in this embodiment, the friction between the friction member 23 and the friction collar 22 is produced by contacting between the circumferential side portion of the friction collar 22 and the friction member 23.

In this embodiment, the friction member 23 comprises a friction outer race installed in the support base 25. In this embodiment, since the support base 25 comprises a base cavity 251, the friction outer race may be installed by interference-fitting with the base cavity 251. Of course, in alternative embodiments, alternative fixed connection manners may also be adopted, wherein the friction outer race is sleeved outside the friction collar 22, such that the friction outer race contacts with the circumferential side portion of the friction collar 22 to produce friction.

The circumferential sidewall of the friction collar 22 preferably has an outer conical surface 221, the conical surface being gradually shrunk towards a side distant from the plane bearing; 24, and an inner sidewall of the friction outer race has an inner conical surface adapted the outer conical surface, as illustrated in Fig. 7. Like the first embodiment, the rotary screw 10 has an axial play space. The circumferential sidewall of the friction collar 22 is configured to have an outer conical surface 221, such that when the rotary screw 10 applies an axial force against the friction collar 22, the circumferential sidewall of the friction collar 22 is pressed increasingly tightly against the inner sidewall of the friction outer race, i.e., the greater the axial force, the greater the friction; the smaller the axial force, the smaller the friction. Or, the circumferential side surface of the friction collar is a stepped surface, the inner sidewall of the friction outer race being adapted to the stepped surface.

In addition, the radial support member 26 in this embodiment is preferably a support ring. The support ring may be a plastic collar, which is more cost-effective than bearings.

It is noted that the structure and shape of the circumferential sidewall of the friction collar 22 are not limited to the outer conical surface 221 in this embodiment. In alternative embodiments, its shape and structure may vary. For example, it may adopt a stepped surface, in which case, combination of the circumferential side friction and the end face friction is achieved. Likewise, other irregular shapes may also be employed. All of such embodiments fall within the protection scope of the present invention.

### Third Embodiment

As illustrated in Figs. 1 to 5, this embodiment relates to a linear actuator. As described above, the linear actuator in this embodiment is preferably a lifting column, comprising: a first sleeve 31, a second sleeve 32, a rotary screw 10, a transmission nut, and a driving motor 11, wherein the driving motor 11 activates the rotary screw 10 to rotate, the rotating rotary screw 10 drives the transmission nut to move axially, and movement of the transmission nut drives the first sleeve 31 and the second sleeve 32 to extend and retract relative to each other.

The lifting column in this embodiment is preferably a three-segment lifting column, wherein the first sleeve 31, the second sleeve 32, the rotary screw 10, the transmission nut, and the driving motor 11 constitute a transmission assembly; the lifting column further comprises an inner tube 41, a middle tube 42, and an outer tube 43, wherein the transmission assembly drives the inner tube 41, the middle tube 42, and the outer tube 43 to extend and retract relative to each other. The operating principle of the three-segment lifting column has been disclosed in detail in previous applications filed by the same applicant, which will not be detailed here.

It is additionally noted that the linear actuator may refer to the lifting column as illustrated in this embodiment or an electric pushrod applied to an electric driving apparatus.

What have been described above are embodiments helping to understand the invention, and embodiments of the present invention; A person skilled in the art should understand that the present invention includes, but not limited to the contents described in the drawings or the embodiments. Any modifications without departing from the functions and structural principles of the present invention will be included within the scope of the claims.

## Claims

1. A linear actuator, comprising: a first sleeve (31), a second sleeve (32), a rotary screw (10), a transmission nut, and a driving motor (11), the driving motor (11) activating the rotary screw (10) to rotate, the rotating rotary screw (10) driving the transmission nut to move axially, and movement of the transmission nut causing the first sleeve (31) and the second sleeve (32) to extend and retract relative to each other, wherein a self-locking apparatus is mounted on the rotary screw (10);
the self-locking apparatus comprising: a one-way bearing (21) and a friction collar (22), wherein the one-way bearing (21) comprises an inner race (211) and an outer race (212), the inner race (211) being sleeved to a rotary screw (10) of the linear actuator, the friction collar (22) being connected to the outer race (212); wherein the self-locking apparatus further comprises a friction member (23) fitted with the friction collar (22), such that when the rotary screw (10) rotates forwardly, the outer race (212) does not rotate; and when the rotary screw (10) rotates reversely, the outer race (212), the inner race (211), and the friction collar (22) rotate synchronously, such that friction is produced by contacting between the friction collar (22) and the friction member (23),
wherein the friction collar (22) is sleeved over the outer race (212), and a plane bearing (24) is further mounted on the rotary screw (10),
wherein the linear actuator further comprises a support base (25), an axial direction of the support base (25) being distant from the plane bearing (24); the friction member (23) comprises a friction outer race mounted in the support base (25), the friction outer race being sleeved outside the friction collar (22), such that friction is produced by contacting between the friction outer race and a circumferential side portion of the friction collar (22),
**characterized in that** the plane bearing (24) and the friction member (23) are located at two different axial sides of the friction collar (22) and **in that**
a circumferential sidewall of the friction collar (22) has an outer conical surface (221), the outer conical surface (221) being gradually shrunk towards a side distant from the plane bearing (24), an inner sidewall of the friction outer race has an inner conical surface adapted to the outer conical surface (221); or, a circumferential side surface of the friction collar (22) is a stepped surface, the inner sidewall of the friction outer race being adapted to the stepped surface.

2. The linear actuator according to claim 1, wherein a floating gap is provided between the friction collar (22) and the friction member (23) along an axial direction of the rotary screw (10).

3. The linear actuator according to claim 1, wherein a friction is produced between a circumferential side portion of the friction collar (22) and the friction member (23); and friction is produced between an axial end portion of the friction collar (22) and the friction member (23).

4. The linear actuator according to one of the preceding claims, wherein the linear actuator further comprises a support base (25), an axial direction of the support base (25) being distant from the plane bearing (24), and the friction member (23) comprises a friction pad mounted in the support base (25), such that friction is produced when the friction pad abuts against an axial end portion of the friction collar (22).

5. The linear actuator according to one of the preceding claims 1, wherein a stepped portion (101) is provided on the rotary screw (10), wherein the plane bearing (24) is axially positioned on the stepped portion (101).

6. The linear actuator according to one of the preceding claims, wherein the support base (25) is provided with a base cavity (251), the friction member (23) is mounted in the base cavity (251) and the friction collar (22) is at least partially embedded in the base cavity (251), a radial support member (26) is provided between the friction collar (22) and a wall of the base cavity (251), and the radial support member (26) is a bearing or a support ring.

## Patentansprüche

1. Ein Linearaktuator, umfassend: Eine erste Hülse (31), eine zweite Hülse (32), eine Drehschraube (10), eine Übertragungsmutter und einen Antriebsmotor (11), wobei der Antriebsmotor (11) die Drehschraube (10) zur Drehung antreibt, wobei die sich drehende Drehschraube (10) die Übertragungsmutter zu axialer Bewegung antreibt, und wobei die Bewegung der Übertragungsmutter bewirkt, dass sich die erste Hülse (31) und die zweite Hülse (32) relativ zueinander verlängern und einziehen, wobei eine Selbstsperrvorrichtung an der Drehschraube (10) angebracht ist;
die Selbstsperrvorrichtung, umfassend: Ein Einwegelager (21) und einen Reibkragenring (22), wobei das Einwegelager (21) einen inneren Laufring (211) und einen äußeren Laufring (212) umfasst, wobei der innere Laufring (211) mit einer Drehschraube (10) des Linearaktuators verbunden ist und der Reibkragenring (22) mit dem äußeren Laufring (212) verbunden ist; wobei die Selbstsperrvorrichtung ferner ein Reibungselement (23) umfasst, das mit dem Reibkragenring (22) verbunden ist, so dass, wenn sich die Drehschraube (10) vorwärts dreht, sich der äußere Laufring (212) nicht dreht; und wenn sich die Drehschraube (10) rückwärts dreht, sich der äußere Laufring (212), der innere Laufring (211) und der Reibkragenring (22) synchron drehen, so dass Reibung durch den Kontakt zwischen dem Reibkragenring (22) und dem Reibungselement (23) erzeugt wird,
wobei der Reibkragenring (22) über den äußeren Laufring (212) gestülpt ist und ein Gleitlager (24) ferner an der Drehschraube (10) angebracht ist,
wobei der Linearaktuator ferner eine Stützbasis (25) umfasst, wobei eine axiale Richtung der Stützbasis (25) von dem Gleitlager (24) entfernt ist; das Reibungselement (23) umfasst einen äußeren Reibungslaufring, der in der Stützbasis (25) montiert ist, wobei der äußere Reibungslaufring den Reibkragenring (22) außen ummantelt, so dass Reibung durch den Kontakt zwischen dem äußeren Reibungslaufring und dem seitlichen Abschnitt des Umfangs des Reibkragenrings (22) erzeugt wird,
**dadurch gekennzeichnet, dass** das Gleitlager (24) und das Reibungselement (23) an zwei verschiedenen axialen Seiten des Reibkragenrings (22) angeordnet sind und dass eine seitliche Wand des Umfangs des Reibkragenrings (22) eine äußere konische Oberfläche (221) aufweist, wobei die äußere konische Oberfläche (221) allmählich zu einer von dem Gleitlager (24) entfernten Seite hin schrumpft, wobei eine innere Seitenwand des äußeren Reibungslaufrings eine innere konische Oberfläche aufweist, die an die äußere konische Oberfläche (221) angepasst ist; oder wobei eine Umfangsseitenfläche des Reibkragenrings (22) eine gestufte Fläche ist, wobei die innere Seitenwand des äußeren Reibungslaufrings an die gestufte Fläche angepasst ist.

2. Linearaktuator nach Anspruch 1, wobei zwischen dem Reibkragenring (22) und dem Reibungselement (23) in axialer Richtung der Drehschraube (10) ein schwimmender Spalt vorgesehen ist.

3. Linearaktuator nach Anspruch 1, wobei Reibung zwischen einem Umfangsseitenabschnitt des Reibkragenrings (22) und dem Reibungselement (23) erzeugt wird; und Reibung zwischen einem axialen Endabschnitt des Reibkragenrings (22) und dem Reibungselement (23) erzeugt wird.

4. Linearaktuator nach einem der vorhergehenden Ansprüche, wobei der Linearaktuator ferner eine Stützbasis (25) umfasst, wobei eine axiale Richtung der Stützbasis (25) von dem Gleitlager (24) entfernt ist, und das Reibungselement (23) einen Reibbelag umfasst, der in der Stützbasis (25) montiert ist, so dass Reibung erzeugt wird, wenn der Reibbelag an einen axialen Endabschnitt des Reibkragenrings (22) anliegt.

5. Linearaktuator nach einem der vorhergehenden Ansprüche, wobei an der Drehschraube (10) ein gestufter Abschnitt (101) vorgesehen ist, wobei das Gleitlager (24) axial auf dem gestuften Abschnitt (101) angeordnet ist.

6. Linearaktuator nach einem der vorhergehenden Ansprüche, wobei die Stützbasis (25) mit einem Basishohlraum (251) versehen ist, das Reibelement (23) in dem Basishohlraum (251) montiert ist und der Reibkragenring (22) zumindest teilweise in den Basishohlraum (251) eingebettet ist, ein radiales Stützelement (26) zwischen dem Reibkragenring (22) und einer Wand des Basishohlraums (251) vorgesehen ist, und das radiale Stützelement (26) ein Lager oder ein Stützring ist.

## Revendications

1. Actionneur linéaire, comprenant : un premier manchon (31), un second manchon (32), une vis rotative (10), un écrou de transmission et un moteur d'entraînement (11), le moteur d'entraînement (11) activant la vis rotative (10) pour qu'elle tourne, la vis rotative en rotation (10) entraînant l'écrou de transmission pour qu'il se déplace axialement, et le mouvement de l'écrou de transmission amenant le premier manchon (31) et le second manchon (32) à s'étendre et à se rétracter l'un par rapport à l'autre, dans lequel un appareil autobloquant est monté sur la vis rotative (10) ;
l'appareil autobloquant comprenant : un palier unidirectionnel (21) et un collier de frottement (22), dans lequel le palier unidirectionnel (21) comprend une bague intérieure (211) et une bague extérieure (212), la bague intérieure (211) étant manchonnée sur une vis rotative (10) de l'actionneur linéaire, le collier de frottement (22) étant relié à la bague extérieure (212) ; dans lequel l'appareil autobloquant comprend en outre un élément de frottement (23) équipé du collier de frottement (22), de sorte que lorsque la vis rotative (10) tourne vers l'avant, la bague extérieure (212) ne tourne pas ; et lorsque la vis rotative (10) tourne en sens inverse, la bague extérieure (212), la bague intérieure (211) et le collier de frottement (22) tournent de manière synchrone, de sorte que le frottement soit produit par un contact entre le collier de frottement (22) et l'élément de frottement (23),
dans lequel le collier de frottement (22) est manchonné sur la bague extérieure (212), et un palier plan (24) est en outre monté sur la vis rotative (10),
dans lequel l'actionneur linéaire comprend en outre une base de support (25), une direction axiale de la base de support (25) étant éloignée du palier plan (24) ; l'élément de frottement (23) comprend une bague extérieure de frottement montée dans la base de support (25), la bague extérieure de frottement étant manchonnée à l'extérieur du collier de frottement (22), de sorte que le frottement soit produit par un contact entre la bague extérieure de frottement et une partie latérale circonférentielle du collier de frottement (22),
**caractérisé en ce que** le palier plan (24) et l'élément de frottement (23) sont situés sur deux côtés axiaux différents du collier de frottement (22) et **en ce que**
une paroi latérale circonférentielle du collier de frottement (22) a une surface conique extérieure (221), la surface conique extérieure (221) se réduisant progressivement vers un côté éloigné du palier plan (24), une paroi latérale intérieure de la bague extérieure de frottement a une surface conique intérieure adaptée à la surface conique extérieure (221) ; ou, une surface latérale circonférentielle du collier de frottement (22) est une surface étagée, la paroi latérale intérieure de la bague extérieure de frottement étant adaptée à la surface étagée.

2. Actionneur linéaire selon la revendication 1, dans lequel un espace flottant est prévu entre le collier de frottement (22) et l'élément de frottement (23) le long d'une direction axiale de la vis rotative (10).

3. Actionneur linéaire selon la revendication 1, dans lequel un frottement est produit entre une partie latérale circonférentielle du collier de frottement (22) et l'élément de frottement (23) ; et un frottement est produit entre une partie d'extrémité axiale du collier de frottement (22) et l'élément de frottement (23).

4. Actionneur linéaire selon l'une des revendications précédentes, dans lequel l'actionneur linéaire comprend en outre une base de support (25), une direction axiale de la base de support (25) étant éloignée du palier plan (24), et l'élément de frottement (23) comprend un patin de frottement monté dans la base de support (25), de sorte qu'un frottement soit produit lorsque le patin de frottement vient en butée contre une partie d'extrémité axiale du collier de frottement (22).

5. Actionneur linéaire selon l'une des revendications précédentes 1, dans lequel une partie étagée (101) est prévue sur la vis rotative (10), dans lequel le palier plan (24) est positionné axialement sur la partie étagée (101).

6. Actionneur linéaire selon l'une des revendications précédentes, dans lequel la base de support (25) est pourvue d'une cavité de base (251), l'élément de frottement (23) est monté dans la cavité de base (251) et le collier de frottement (22) est au moins partiellement inséré dans la cavité de base (251), un élément de support radial (26) est prévu entre le collier de frottement (22) et une paroi de la cavité de base (251), et l'élément de support radial (26) est un palier ou un anneau de support.
